# EUROPEAN PATENT APPLICATION

(11) **EP 1 876 437 A1**
(43) Date of publication of application: **09.01.2008**
(21) Application number: 06732321.2
(22) Date of filing: 25.04.2006
(51) Int. Cl.: G01N 13/10, G01B 21/30

(54) **SCANNING STAGE FOR SCANNING PROBE MICROSCOPE**

(30) Priority: 26.04.2005 JP 2005128267
(71) Applicant: Olympus Corporation, Tokyo 151-0072 (JP)
(72) Inventor: UE, Yoshihiro c/o Olympus Intellectual Property, Tokyo 192-8512 (JP)
(74) Representative: von Hellfeld, Axel
(86) International application number: PCT/JP2006/308661
(87) International publication number: WO 2006/118117

(57) **Abstract**

A scanning stage includes a specimen support (9) that holds an observation specimen and a scanning mechanism that is configured to move the specimen support (9) in X, Y, and Z directions. The scanning mechanism includes an X-Y stage including a movable portion (4), an X-Y elastic member, Z elastic members (7A, 7B), and a stationary portion (5), a stationary base (1) to which the X-Y stage is fixed, an X piezoelectric element (2A) that moves the movable portion (4) in the X direction, a Y piezoelectric element that moves the movable portion (4) in the Y direction, and a piezoelectric element (3) that moves the specimen support (9) in the Z direction. The Z piezoelectric element (3) is fixed to the upper surface of the movable portion (4). The specimen support (9) is fixed to an upper surface of the Z piezoelectric element (3) by wax (10).

## Description

### Technical Field

The present invention relates to a scanning stage used for a scanning probe microscope.

### Background Art

A scanning probe microscope (SPM) is a scanning microscope that mechanically scans a mechanical probe to obtain information on a specimen surface. The scanning probe microscope includes a scanning tunneling microscope (STM), an atomic force microscope (AFM), a scanning magnetic force microscope (MFM), a scanning capacitance microscope (SCaM), a scanning near-field optical microscope (SNOM), a scanning thermal microscope (SThM), and the like. Recently, a nano-indentator, which urges a diamond probe against a specimen surface to form an impression and analyze it to check the hardness and the like of the specimen, is ranked as one SPM and popular as well as the various types of microscopes described above.

For example, a scanning probe microscope is an instrument that raster-scans a mechanical probe and a specimen relatively in an X-Y direction to obtain surface information on a desired specimen region through the mechanical probe. During X-Y scanning, it feedback-controls also in a Z direction so that the interaction of the specimen and the probe keeps constant. Different from regular movement in the X-Y direction, the Z-direction movement is irregular because it reflects the surface configuration and the surface state of the specimen. The Z-direction movement is generally regarded as Z-direction scanning movement. The Z-direction scanning is movement with the highest frequency among scanning in the X, Y, and Z directions.

A scanning mechanism used in the scanning probe microscope comprises, e.g., a specimen support that holds an observation specimen and a scanning mechanism that scans the specimen support. As a method of fixing the specimen support to the scanning mechanism, a method that uses a magnet is available. This method is disclosed in, e.g., Jpn. Pat. Appln. KOKOKU Publication No. 6-31737. A conventional scanning probe microscope has a comparatively low scanning speed and acquires one image with several minutes. Thus, the weight of the scanning target is not an issue. Recently, however, an apparatus that can acquire several images within one second has been developed to meet the demand for a higher scanning speed. To increase the scanning speed, the weight of the scanning target must be light. With the method of fixing the specimen support with the magnet, it is difficult to decrease the weight of the scanning target. Jpn. Pat. Appln. KOKAI Publication No. 2003-42931 proposes a method of fixing the specimen support using grease. With this method, as the specimen support is fixed by the grease, the scanning target can be very lightweight. Hence, this method is suitable for increasing the scanning speed.

### Disclosure of Invention

As the grease has a low viscosity at room temperature, even a small force can readily move the specimen support from the fixed position undesirably. For example, when the scanning speed in the X-Y direction increases, due to the inertia force of the specimen support, the specimen support cannot follow the scanning movement of the scanning mechanism. If the observation target exists in the water, the resistance force of water during scanning degrades the ability to follow the scanning movement. If the ability of the specimen support to follow the scanning movement is poor, the acquired image may be distorted, or cannot reflect the correct shape of the specimen. Then, the same position of the specimen cannot be observed stably.

The present invention has been made in consideration of the above situations and an object of the invention is to provide a stage for a scanning probe microscope that follows even high-speed scanning well.

A scanning stage for a scanning probe microscope according to the present invention includes a specimen support that holds an observation specimen, and a scanning mechanism configured to move the specimen support in X, Y, and Z directions, the specimen support being fixed to the scanning mechanism by wax.

### Brief Description of Drawings

FIG. 1 is a plan view of a scanning stage for a scanning probe microscope according to the first embodiment of the present invention;
FIG. 2 is a sectional view taken along the line II - II of the scanning stage for the scanning probe microscope shown in FIG. 1;
FIG. 3 is a plan view of a scanning stage for a scanning probe microscope according to the second embodiment of the present invention;
FIG. 4 is a plan view of a scanning stage for a scanning probe microscope according to the third embodiment of the present invention;
FIG. 5 is a plan view of a scanning stage for a scanning probe microscope according to the fourth embodiment of the present invention; and
FIG. 6 is a plan view of a scanning stage for a scanning probe microscope according to the fifth embodiment of the present invention.

### Best Mode for Carrying Out the Invention

The embodiments of the present invention will be described with reference to accompanying drawing.

### <First Embodiment>

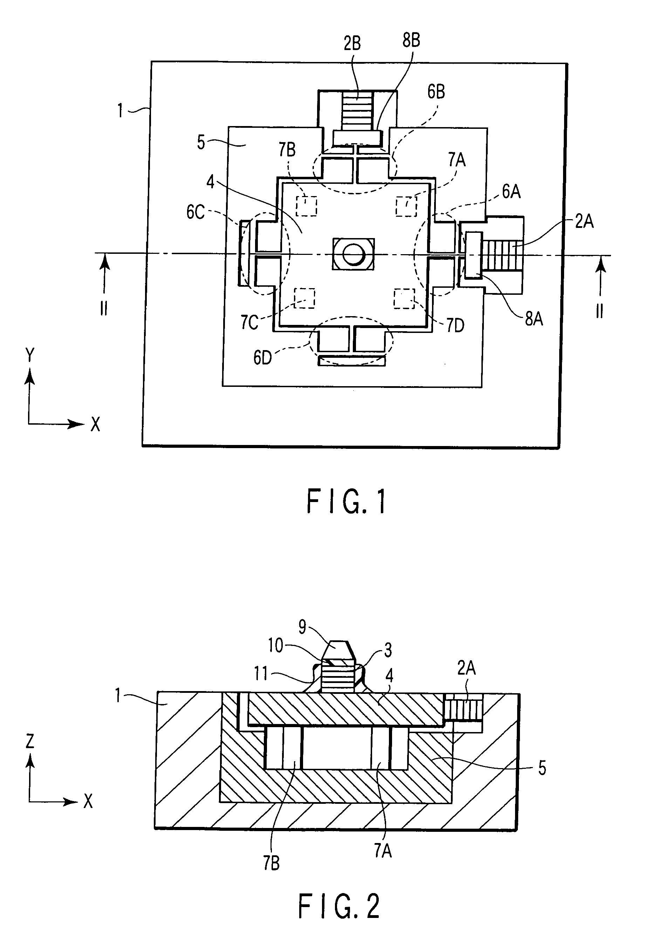

A scanning stage for a scanning probe microscope according to the first embodiment is shown in FIGS. 1 and 2. Referring to FIGS. 1 and 2, the scanning stage includes a specimen support 9 that holds an observation specimen and a scanning mechanism that is allowed to move the specimen support 9 in X, Y, and Z directions. The scanning mechanism includes an X-Y stage including a movable portion 4, X-Y elastic members 6A, 6B, 6C, and 6D, Z elastic members 7A, 7B, 7C, and 7D, and a stationary portion 5; a stationary base 1 to which the X-Y stage is fixed; an X piezoelectric element 2A that is an X actuator for moving the movable portion 4 in the X direction; a Y piezoelectric element 2B that is a Y actuator for moving the movable portion 4 in the Y direction; and a Z piezoelectric element 3 that is a Z actuator for moving the specimen support 9 in the Z direction.

The stationary portion 5 is fixed in the stationary base 1 by adhesion or screw fastening. The movable portion 4 is connected to the stationary portion 5 through the Z elastic members 7A to 7D. The Z elastic members 7A to 7D support the movable portion 4 with high rigidity in the Z direction. The Z elastic members 7A to 7D are arranged at positions substantially equidistant from the center of the movable portion 4. The center of gravity of the movable portion 4 is located at almost the center of the movable portion 4. The movable portion 4 is connected to the stationary portion 5 through the X-Y elastic members 6A to 6D. The X-Y elastic members 6A to 6D support the movable portion 4 with high rigidity in the X-Y direction. The X-Y elastic members 6A to 6D are arranged symmetrically with respect to each of the X and Y driving axes. The X-Y elastic members 6A and 6C are located on an X-axis, and the X-Y elastic members 6B and 6D on a Y-axis. The X-Y elastic member 6A is provided with a pressing portion 8A, against which the X piezoelectric element 2A for X-direction driving is abutted. The X-Y elastic member 6B is provided with a pressing portion 8B, against which the Y piezoelectric element 2B for Y-direction driving is abutted.

The X-Y stage constituted by the movable portion 4, the X-Y elastic members 6A to 6D, the Z elastic members 7A to 7B, and the stationary portion 5 is obtained by cutting from one integral component and made of a material such as aluminum. The stationary base 1, which fixes the X-Y stage, may be of the same material as the X-Y stage, but it may be preferably made of a material, e.g., stainless steel, which has a higher Young's modulus than that of aluminum.

One end of the X piezoelectric element 2A for X-direction driving abuts against the pressing portion 8A, and the other end is fixed to the stationary base 1. The X piezoelectric element 2A is arranged so that a predetermined pilot pressure acts on it along the X-axis. The central line of the X piezoelectric element 2A extends through almost the center of gravity of the movable portion 4. One end of the Y piezoelectric element 2B for Y-direction driving abuts against the pressing portion 8B, and the other end is fixed to the stationary base 1. The Y piezoelectric element 2B is arranged so that a predetermined pilot pressure acts on it along the Y-axis. The central line of the Y piezoelectric element 2B extends through almost the center of gravity of the movable portion 4.

The Z piezoelectric element 3 for Z-direction driving is fixed to the upper surface of the movable portion 4. The central line of the Z piezoelectric element 3 extends through almost the center of gravity of the movable portion 4. The surface of the Z piezoelectric element 3 is covered with a resin material 11 that is resistant to an organic solvent or the like. The specimen support 9 is fixed to the upper surface of the Z piezoelectric element 3 by wax 10. The thinner the wax 10 is, the more firmly the specimen support 9 is fixed.

Wax has a very high viscosity at room temperature. The viscosity of the wax is adjustable by compounding. For example, even a wax that is pasty at room temperature has a coefficient of kinematic viscosity of about 2,000 [mm²/s]. According to experiments, the wax that is employed in the present invention is almost solid. For example, silicone grease has a coefficient of kinematic viscosity of about 60 [mm²/s] at room temperature and about 30 [mm²/s] at 100°C. Semi-solid wax has a coefficient of kinematic viscosity of about 1,000 or more [mm²/s] at room temperature and about 15.3 [mm²/s] at 100°C.

The specimen support 9 may be fixed to the upper surface of the Z piezoelectric element 3 by use of a plastic adhesive in place of the wax 10.

The observation specimen is fixed to the specimen support 9. The observation specimen may be fixed to the specimen support directly or through a medium that fixes the observation appropriately.

The operation will be described. For example, a case of displacing the observation specimen, i.e., the specimen support 9, in the X direction will be described. To drive the movable portion 4 in the X direction, a voltage is applied to the X piezoelectric element 2A to extend and contract it. As one end of the X piezoelectric element 2A is fixed to the stationary base 1, a displacement of the X piezoelectric element 2A displaces the pressing portion 8A abutted against the other end of the X piezoelectric element 2A. This displacement is transmitted to the X-Y elastic member 6A. Since a thin leaf spring portion of the X-Y elastic member 6A extending parallel to the X-axis has high X-direction rigidity, the displacement is transmitted to the movable portion 4. The X-Y elastic member 6C on the X-axis, which is arranged symmetrically with respect to the Y-axis, does not hinder the displacement of the movable portion 4 because a thin leaf spring portion of the X-Y elastic member 6C extending parallel to the Y-axis has low X-direction rigidity. Also, the X-Y elastic members 6B and 6D, which are arranged on the Y-axis, do not hinder the displacement of the movable portion 4 either, because thin leaf spring portions of the X-Y elastic members 6B and 6D extending parallel to the Y-axis have low X-direction rigidities. Furthermore, the Z elastic members 7A to 7D, which support the Z-direction of the movable portion 4 with high rigidity, do not hinder the displacement of the movable portion 4 because the Z elastic members 7A to 7D have low rigidities in the X-Y direction. So, the movable portion 4 displaces in the X direction in accordance with the extension and contraction of the X piezoelectric element 2A.

Furthermore, when the movable portion 4 is to move in the X direction, since the X-Y elastic members 6A to 6D are arranged symmetrically with respect to the driving axes, the movable portion 4 displaces linearly in an X-Y plane without rotating. Also, when the movable portion 4 is to move in the X direction, since the Z elastic members 7A to 7D, which are arranged on the lower surface of the movable portion 4, serve as parallel leaf springs, the upper surface of the movable portion 4 moves horizontally without inclination. Furthermore, since the line of driving force extending in the driving direction through the center of the piezoelectric element passes through the center of gravity of the movable portion, even when the movable portion 4 moves at high speed, the angular momentum by an inertia force does not occur readily, so that the movable portion 4 displaces highly accurately without rotation.

When the X piezoelectric element 2A displaces, a reaction force accompanying deformation of the X-Y elastic member 6A acts on the stationary base 1 at a portion that fixes the X piezoelectric element 2A. Since the stationary base 1 is made of a material having a high Young's modulus and the portion that fixes the X piezoelectric element 2A does not deform much, the displacement of the X piezoelectric element 2A is mostly transmitted to the pressing portion 8A.

This discussion concerning movement in the X direction applies to the movement in the Y direction as well.

To move the observation specimen, i.e., the specimen support 9, in the Z direction, a voltage is applied to the Z piezoelectric element 3 to extend and contract it.

When moving the specimen support 9 as described above, the higher the moving speed of the specimen support 9, the larger the inertia force of the specimen support 9. When the specimen support 9 is placed in the water to observe a living specimen, the resistance force of water acting on the specimen support 9 increases. Since the specimen support 9 is fixed by the wax 10, even when the specimen support 9 receives an inertia force or a resistance force, it moves to follow the movement of the scanning mechanism well. As a result, an observation image that correctly reflects the shape of the observation shape and does not include much distortion can be obtained stably.

When the specimen support 9 is to be removed after the observation is finished, a release agent such as an organic solvent is applied to the wax 10, dissolving the wax 10 to allow easy removal of the specimen support 9. At this time, since the surface of the Z piezoelectric element 3 is covered with the resin material 11, the Z piezoelectric element 3 is not damaged by the organic solvent.

### <Second Embodiment>

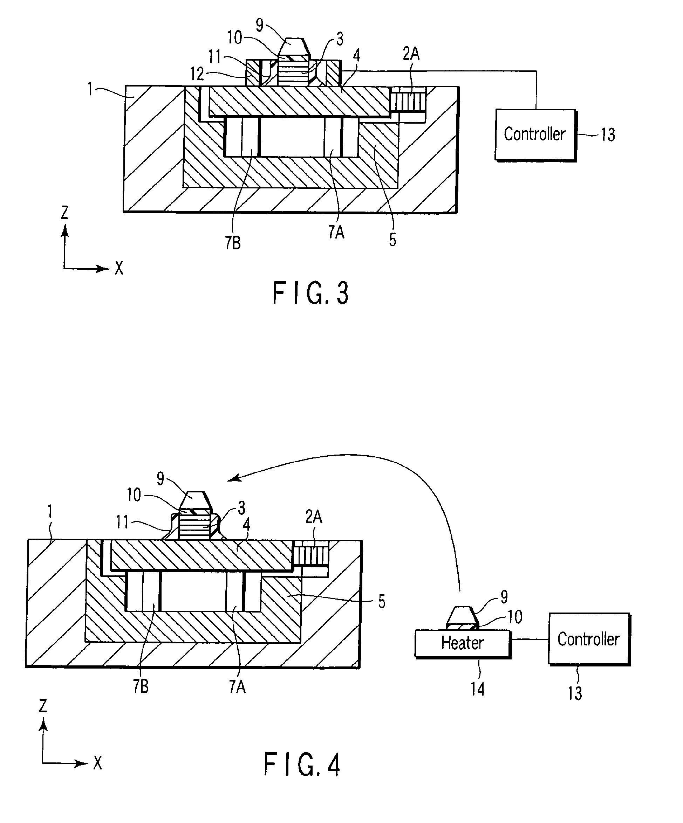

A scanning stage for a scanning probe microscope according to the second embodiment is shown in FIG. 3. The configuration of this embodiment is obtained by adding a heat source and a temperature controller to the configuration of the first embodiment. The configuration and the operation of the scanning mechanism are the same as those of the first embodiment.

A heater 12 is arranged to surround a Z piezoelectric element 3. The ON/OFF operation and the temperature setting of the heater 12 are controlled by a controller 13.

When mounting a specimen support 9, the heater 12 is turned on, heating wax 10 to decrease its viscosity. Only light pressure is applied on the specimen support 9, so that an excessive portion of the wax 10 is squeezed out from under the lower surface of the specimen support 9, decreasing the thickness of the wax 10. After that, the power supply of the heater is turned off, increasing the viscosity of the wax 10 to firmly fix the specimen support 9.

When removing the specimen support 9, the power supply of the heater 12 is turned on, so that the viscosity of the wax 10 decreases again, allowing the specimen support 9 to be removed from the Z piezoelectric element by a small force. Hence, no excessive force acts on the Z piezoelectric element to damage it.

In AFM observation, if the heater is turned on, it can control the temperature of the observation specimen and the surrounding temperature to an arbitrarily set temperature.

### <Third Embodiment>

FIG. 4 shows a scanning stage for a scanning probe microscope according to the third embodiment. The configuration of this embodiment is obtained by adding a heat source and a temperature controller to the configuration of the first embodiment. The configuration and the operation of the scanning mechanism are the same as those of the first embodiment.

A heater 14 is placed near the scanning mechanism. The ON/OFF operation and the temperature setting of the heater 14 are controlled by a controller 13. Wax is applied to a specimen support 9 on the heater 14. With the heater 14 being turned on, wax 10 is applied to the lower surface of the specimen support 9, and the specimen support 9 is placed on the heater 14. This heats the wax 10 to decrease its viscosity. Only light pressure is applied on the specimen support 9, so that an excessive portion of the wax 10 is squeezed out from under the lower surface of the specimen support 9, decreasing the thickness of the wax. After that, when the specimen support 9 is placed on a Z piezoelectric element 3, the wax 10 cools down to increase its viscosity. This and the small thickness of the wax 10 firmly fix the specimen support 9.

### <Fourth Embodiment>

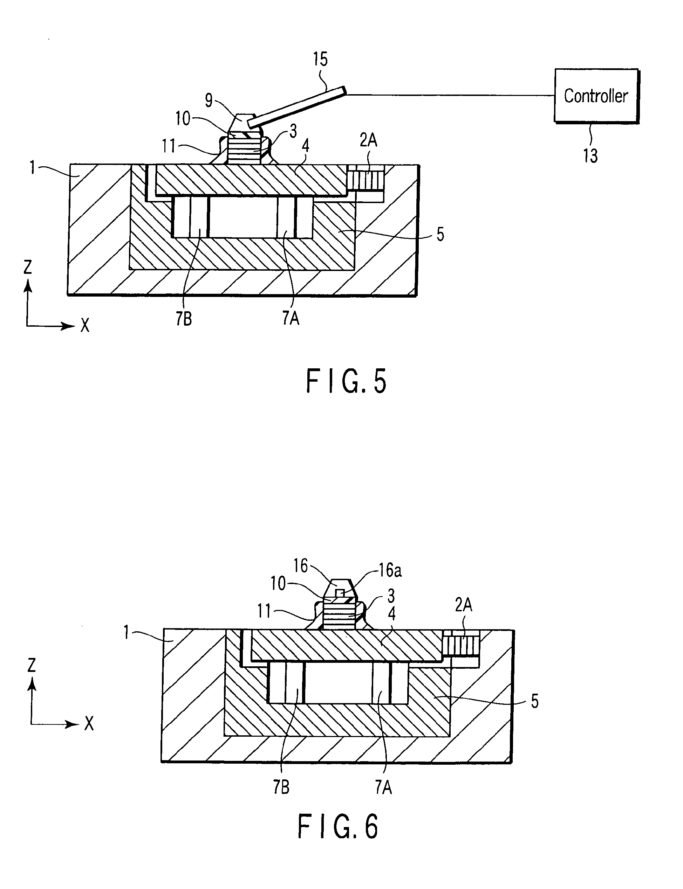

FIG. 5 shows a scanning stage for a scanning probe microscope according to the fourth embodiment. The configuration of this embodiment is obtained by adding a heat source and a temperature controller to the configuration of the first embodiment. The configuration and the operation of the scanning mechanism are the same as those of the first embodiment.

The specimen support 9 is mounted on and removed from by use of a holding tool heater 15 configured to hold a specimen support 9. For example, the holding tool heater 15 is similar to a pair of tweezers with a heater. The holding tool heater 15 allows holding the specimen support 9 to move it freely. The ON/OFF operation and the temperature setting of the holding tool heater 15 are controlled by a controller 13.

When the specimen support 9 is held with the holding tool heater 15 to be fixed to the Z piezoelectric element 3, the holding tool heater 15 is turned on, heating the wax to decrease its viscosity. Only light pressure is applied on the specimen support 9, so that an excessive portion of the wax 10 is squeezed out from under the lower surface of the specimen support 9, decreasing the thickness of the wax. Then, the power supply of the heater is turned off, or the specimen support 9 is removed from the holding tool heater 15, cooling down the wax to increase viscosity, so that the specimen support 9 is fixed firmly. When removing the specimen support 9, the power supply of the holding tool heater 15 is turned on, so that the viscosity of wax 10 holding the specimen support 9, allowing the specimen support 9 to be removed from the Z piezoelectric element by only a small force. Hence, no excessive force acts on the Z piezoelectric element to damage it.

### <Fifth Embodiment>

FIG. 6 shows a scanning stage for a scanning probe microscope according to the fifth embodiment. The configuration of this embodiment is obtained by changing the specimen support in the configuration of the first embodiment. The configuration and the operation of the scanning mechanism are the same as those of the first embodiment.

A specimen support 16 has a groove 16a on the lower surface, i.e., on the surface that is to be bonded to a Z piezoelectric element 3. After the specimen support 16 is mounted on the upper surface of the Z piezoelectric element 3, the specimen support 16 is slid several times along the upper surface of the Z piezoelectric element 3, so that an excessive portion of wax 10 enters the groove 16a to decrease the thickness of the wax 10. So, the specimen support 16 is fixed firmly. When the specimen support 16 is to be removed, a release agent is applied to the wax 10. The release agent flows along the groove 16a to facilitate removal of the specimen support 16. When an adhesive is used in place of the wax 10, the same effect can be obtained.

So far the embodiments of the present invention have been described with reference to the drawing. Note that the present invention is not limited to these embodiments. Various changes and modifications may be made without departing from the spirit and scope of the invention.

### Industrial Applicability

The present invention provides a scanning stage for a scanning probe microscope that follows even high-speed scanning well.

## Claims

1. A scanning stage for a scanning probe microscope, comprising
a specimen support (9; 16) that holds an observation specimen, and
a scanning mechanism that is configured to move the specimen support (9; 16) in X, Y, and Z directions,
**characterized in that** the specimen support (9; 16) is fixed to the scanning mechanism by wax (10).

2. A scanning stage for a scanning probe microscope according to claim 1, **characterized in that** the scanning mechanism comprises a movable portion (4), an X actuator (2A) that moves the movable portion (4) in the X direction, a Y actuator (2B) that moves the movable portion (4) in the Y direction, and a Z actuator (3) that moves the specimen support (9) in the Z direction, the Z actuator (3) being fixed to an upper surface of the movable portion (4), and the specimen support (9) being fixed to an upper surface of the Z actuator (3).

3. A scanning stage for a scanning probe microscope according to claim 1, **characterized in that** when the specimen support (9; 16) is mounted on and removed form the scanning mechanism, a heat source (12; 14; 15) is placed near the specimen support (9; 16).

4. A scanning stage for a scanning probe microscope according to claim 3, **characterized in that** the heat source (12) comprises a heater that is arranged to surround the Z actuator (3).

5. A scanning stage for a scanning probe microscope according to claim 3, **characterized in that** the heat source (14) comprises a heater that is placed near the scanning mechanism.

6. A scanning stage for a scanning probe microscope according to claim 3, **characterized in that** the heat source (15) comprises a holding tool heater that is configured to hold the specimen support (9).

7. A scanning stage for a scanning probe microscope according to claim 1, **characterized in that** the specimen support (9) has a groove (16a) on a surface that is to be bonded to the scanning mechanism.
